# EUROPÄISCHE PATENTANMELDUNG

(11) **EP 3 409 518 A1**
(43) Veröffentlichungstag der Anmeldung: **05.12.2018**
(21) Anmeldenummer: 18174575.3
(22) Anmeldetag: 28.05.2018
(51) Int. Cl.: B60H 1/00

(54) **FAHRZEUG-KLIMAANLAGE, INSBESONDERE FÜR EIN ELEKTROFAHRZEUG**

(30) Priorität: 29.05.2017 DE 102017111661
(71) Anmelder: Valeo Thermal Commercial Vehicles Germany GmbH, 82205 Gilching (DE)
(72) Erfinder: Summerer, Franz, 82288 Kottgeisering (DE); Buck, Sarah, 86911 Dießen (DE); Weyn, Mark, 86899 Landsberg (DE); Tanke, Dietmar, 82205 Gilching (DE)
(74) Vertreter: Prinz & Partner mbB

(57) **Zusammenfassung**

Eine Klimaanlage (10) für ein Fahrzeug, insbesondere für ein Elektrofahrzeug, umfasst einen Kältemittelkreislauf (10) mit einem zirkulierenden Kältemittel zum Kühlen und Entfeuchten von Luft. Die Klimaanlage (10) umfasst darüber hinaus einen separaten Kühlmittelkreislauf (12) mit einem zirkulierenden Kühlmittel. Der Kühlmittelkreislauf (12) ist mittels eines Transfer-Wärmetauschers (22) an den Kältemittelkreislauf (10) gekoppelt und gibt vom Kältemittelkreislauf (10) entnommene Wärme über einen Wiedererwärmungs-Wärmetauscher (26) an die durch den Kältemittelkreislauf (10) gekühlte und entfeuchtete Luft ab.

## Beschreibung

Die Erfindung betrifft eine Klimaanlage für ein Fahrzeug, insbesondere für ein Elektrofahrzeug.

In herkömmlichen Kraftfahrzeugen, die von einem Verbrennungsmotor angetrieben werden, steht in der Regel genügend Verlustwärme des Motors zur Verfügung, die zum Beheizen des Fahrzeuginnenraums genutzt werden kann. Die Hauptfunktion der Klimaanlage des Fahrzeugs besteht deshalb darin, die Luft zu kühlen und zu entfeuchten.

Das Trocknen erfolgt durch Abkühlen der Luft (oder zumindest eines Teils davon) unter den Taupunkt, was zu einer Kondensation der in der Luft enthaltenen Feuchtigkeit führt, und anschließendes Aufwärmen der Luft. Dieser Vorgang wird auch als Wiedererwärmen oder Nacherwärmen (re-heating) bezeichnet. Für das Wiedererwärmen wird üblicherweise die Verlustwärme des Verbrennungsmotors in Verbindung mit einem Glykol-Wasser-Gemisch-Kreislauf verwendet.

Bei Elektrofahrzeugen, also Kraftfahrzeugen mit elektrischem Antrieb, entsteht beim Betrieb keine oder nur sehr wenig Verlustwärme. Aus diesem Grund werden für das Beheizen des Fahrzeuginnenraums und das Wiedererwärmen der Luft nach deren Entfeuchtung eine oder mehrere unabhängige Wärmequelle(n) benötigt.

Um Energie zu sparen und dadurch eine größere Reichweite zu erzielen, sollte das Heizen bzw. Wiedererwärmen so effizient wie möglich sein. Deshalb werden in Elektrofahrzeugen die Klimaanlagen auch zum Beheizen des Fahrzeuginnenraums benutzt. Durch Ändern der Funktion der Wärmetauscher oder des Luftstroms kann die Klimaanlage eines Fahrzeugs nämlich auch als Wärmepumpe arbeiten. Das bedeutet, dass die Wärme vom Kompressor der Klimaanlage und die freie Umgebungswärme zum Heizen des Fahrzeuginnenraums genutzt werden.

Das Fehlen von Verlustwärme des Fahrzeugmotors macht bei Elektrofahrzeugen aber auch eine alternative Wärmequelle für das Wiedererwärmen entfeuchteter Luft erforderlich. Hierfür sind verschiedene Lösungen mit Kältemittelkreisläufen bekannt, bei denen warmes oder heißes Kältemittel einen Wärmetauscher durchströmt, der im Luftstrom nach dem Verdampfer angeordnet ist. Ein Beispiel für eine solche Anordnung ist in der DE 10 2007 043 161 B4 gezeigt.

All diese Lösungen haben jedoch den Nachteil, dass eine Reihe zusätzlicher Ventile im Kältemittelkreislauf benötigt werden. Insbesondere bei der Verwendung von CO₂ als Kältemittel (R-744) sind solche Ventile sehr teuer und sollten soweit als möglich vermieden werden. Außerdem erfordert die Verwendung von CO₂ relativ hohe Betriebsdrücke, denen die Ventile und Wärmetauscher für das Wiedererwärmen standhalten müssen. Darüber hinaus ist es nicht ohne Weiteres möglich, das Maß der Wiedererwärmung präzise zu steuern.

Aufgabe der Erfindung ist es, die oben genannten Nachteile zu vermeiden und eine Klimaanlage für ein Fahrzeug, insbesondere für ein Elektrofahrzeug, bereitzustellen, mit der der Fahrzeuginnenraum gekühlt und die Luft nach dem Entfeuchten auf effiziente Weise wieder erwärmt werden kann.

Gelöst wird diese Aufgabe durch eine Klimaanlage mit den Merkmalen des Anspruchs 1. Vorteilhafte und zweckmäßige Ausgestaltungen der erfindungsgemäßen Klimaanlage sind in den Unteransprüchen angegeben.

Die erfindungsgemäße Klimaanlage für ein Fahrzeug, insbesondere für ein Elektrofahrzeug, umfasst einen Kältemittelkreislauf mit einem zirkulierenden Kältemittel zum Kühlen und Entfeuchten von Luft. Die Klimaanlage umfasst darüber hinaus einen separaten Kühlmittelkreislauf mit einem zirkulierenden Kühlmittel. Der Kühlmittelkreislauf ist mittels eines Transfer-Wärmetauschers an den Kältemittelkreislauf gekoppelt und gibt vom Kältemittelkreislauf entnommene Wärme über einen Wiedererwärmungs-Wärmetauscher an die durch den Kältemittelkreislauf gekühlte und entfeuchtete Luft ab.

Die Erfindung beruht auf der Erkenntnis, dass nach dem Entfeuchten der Luft, d.h. nach dem Abkühlen zumindest eines Teils der Luft unter den Kondensationspunkt, die für die Wiedererwärmung der Luft benötigte Wärme nicht von einer externen Wärmequelle bereitgestellt werden muss, wenn, wie insbesondere in einem Elektrofahrzeug, keine ohnehin vorhandene und nutzbare Wärmequelle zur Verfügung steht. Das der Erfindung zugrundeliegende Konzept sieht vielmehr vor, die Wärme über einen separaten Kühlmittelkreislauf zur Verfügung zu stellen, der thermisch an den Kältemittelkreislauf gekoppelt ist. Hierzu wird dem Kältemittel des Kältemittelkreislaufs an einer geeigneten Stelle über den Transfer-Wärmetauscher Wärme entnommen und auf das Kühlmittel des Kühlmittelkreislaufs übertragen. Diese Wärme wird zu einem Wiedererwärmungs-Wärmetauscher befördert, mit dem die entfeuchtete Luft wieder erwärmt wird, bevor sie in den Fahrzeuginnenraum geblasen wird.

Als Wiedererwärmungs-Wärmetauscher kann ein herkömmlicher Lufterhitzer verwendet werden, wie er auch in Kraftfahrzeugen mit Verbrennungsmotor eingesetzt wird, der im Luftstrom hinter dem Verdampfer der Klimaanlage angeordnet ist. Es ist also keine Neuentwicklung dieser Komponente erforderlich.

Die erfindungsgemäße Klimaanlage hat den großen Vorteil, dass sie im Vergleich zu aus dem Stand der Technik bekannten Lösungen ohne zusätzliche Steuerventile auskommt, da im Kältemittelkreislauf keine Abzweigungen benötigt werden. Dies ist insbesondere bei der Verwendung von CO₂ als Kältemittel im Kältemittelkreislauf von Bedeutung, da aufgrund der besonderen Anforderungen (hohe Betriebsdrücke etc.) hier die Ventile sehr aufwendig und teuer sind.

Da im Kühlmittelkreislauf ein "einfaches" Kühlmittel als Wärmeträger verwendet werden kann, das keine besonderen Zustandsänderungen durchlaufen muss, kann der Kühlmittelkreislauf einfach aufgebaut sein und muss keinen besonderen Hochdruckanforderungen standhalten.

Der Transfer-Wärmetauscher sollte im Hochdruckbereich des Kältemittelkreislaufs angeordnet sein, da das Kältemittel nur dort eine für eine effektive Wärmeabgabe ausreichend hohe Temperatur hat.

Gemäß einer bevorzugten Ausführungsform der Erfindung ist der Transfer-Wärmetauscher bezogen auf die Strömungsrichtung des Kältemittels zwischen dem Kompressor und dem Kondensator des Kältemittelkreislaufs angeordnet. Typischerweise wird das Kältemittel beim Verdichten im Kompressor stark erhitzt, sodass eine Wärmeübertragung nach dem Kompressor am effektivsten ist.

Der Transfer-Wärmetauscher kann aber auch zwischen dem Kondensator und dem Expansionsventil des Kältemittelkreislaufs angeordnet sein. Diese Anordnung bietet sich an, wenn etwa hinter dem Kompressor nicht genügend Bauraum zur Verfügung steht und/oder wenn nur eine Übertragung einer vergleichsweise geringen Wärmemenge vorgesehen ist. Für die ausschließliche Nutzung der übertragenen Wärme zur Wiedererwärmung von entfeuchteter Luft ist eine solche Anordnung geeignet. Wenn aber in einem Wärmepumpenbetrieb der Klimaanlage die vom Kältemittelkreislauf abgegebene Wärme zum Heizen des Fahrzeuginnenraums und/oder anderweitig genutzt werden soll, empfiehlt sich eher die zuvor beschriebene Anordnung unmittelbar hinter dem Kompressor des Kältemittelkreislaufs.

In jedem Fall hat die erfindungsgemäße Klimaanlage im Wärmepumpenbetrieb den Vorteil, dass der zusätzliche Transfer-Wärmetauscher die Gesamt-Wärmetauscher-Oberfläche des Kältemittelkreislaufs vergrößert und dadurch die Leistungszahl (COP) der als Wärmepumpe betriebenen Klimaanlage erhöht.

Als Transfer-Wärmetauscher kann ein Plattenwärmetauscher verwendet werden. Plattenwärmetauscher sind bewährt, flexibel in der Gestaltung und können sehr kompakt aufgebaut werden.

Gemäß einem besonderen Aspekt der Erfindung enthält der Kühlmittelkreislauf eine Pumpe mit einstellbarer Förderleistung. Die Förderleistung der Pumpe bestimmt den Durchfluss des Kühlmittels im Kühlmittelkreislauf, d.h. insbesondere welches Volumen pro Zeiteinheit durch den Wiedererwärmungs-Wärmetauscher strömt. Der Grad der Wiedererwärmung der entfeuchteten Luft kann somit durch Einstellen der Förderleistung der Pumpe, insbesondere durch Einstellen ihrer Drehzahl, sehr präzise gesteuert werden. Entsprechendes gilt für die Heizleistung des Kühlmittelkreislaufs, wenn die Klimaanlage im Wärmepumpen-Modus betrieben wird.

Eine Weiterbildung der erfindungsgemäßen Klimaanlage sieht vor, dass im Kühlmittelkreislauf eine Abzweigung zu einer externen Wärmesenke vorgesehen ist. Das bedeutet, dass die vom Kältemittelkreislauf über den Transfer-Wärmetauscher an den Kühlmittelkreislauf abgegebene Wärme zum Teil oder (zeitweise) sogar ausschließlich einer anderen Anwendung zugeführt werden kann. Wenn die Klimaanlage im Wärmepumpen-Modus betrieben wird, ist dies ist beispielsweise für Busse interessant, die üblicherweise über eine dachseitige Klimaanlage verfügen. Wenn im Heizbetrieb viel Wärme über eine solche dachseitige Klimaanlage abgegeben wird, kann dies von den Insassen als unangenehm empfunden werden, da keine gleichzeitige und gleichmäßige Erwärmung im Kopf- und Fußbereich stattfindet. Dank der Abzweigung im Kühlmittelkreislauf kann die Wärme gezielt an einen Ort befördert werden, wo ein Wärmebedarf besteht. Somit besteht im Hinblick auf eine Komfortsteigerung für die Insassen die Möglichkeit, die verfügbare Wärme einer Fußbodenheizung oder einer Fußboden-nahen Heizung im Bus zukommen zu lassen.

Wie bereits angedeutet, wird als Kältemittel im Kältemittelkreislauf vorzugsweise CO₂ verwendet. CO₂ gilt als Kältemittel der Zukunft für Fahrzeugklimaanlagen, soweit die insbesondere durch die hohen Betriebsdrücke bedingten technischen Anforderungen sicher beherrschbar sind. Die erfindungsgemäße Klimaanlage hat diesbezüglich den Vorteil, dass für die Bereitstellung der Wärme zur Wiedererwärmung der entfeuchteten Luft und/oder für eine anderweitige Anwendung im Kältemittelkreislauf keine zusätzlichen Ventile oder sonstigen druckkritischen Komponenten benötigt werden.

Als Kühlmittel im Kühlmittelkreislauf kann ein kostengünstiges Glykol-Wasser-Gemisch oder einfach nur Wasser verwendet werden, da im Kühlmittelkreislauf keine besonderen Anforderungen an das Kühlmittel bestehen.

Weitere Merkmale und Vorteile der Erfindung ergeben sich aus der nachfolgenden Beschreibung und aus den beigefügten Zeichnungen, auf die Bezug genommen wird. In den Zeichnungen zeigt die einzige Figur vereinfacht eine Ausführungsform der erfindungsgemäßen Klimaanlage.

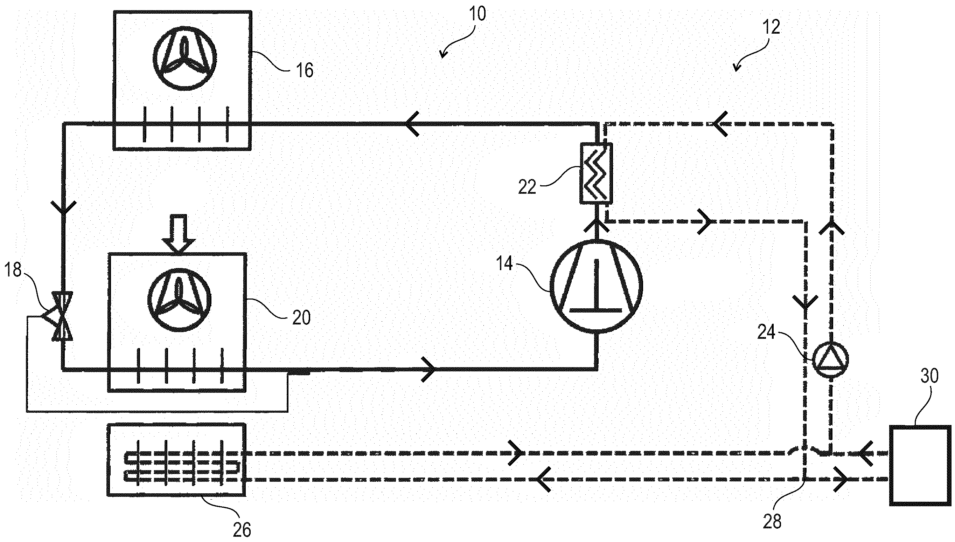

In dem schematischen Schaltbild der Figur 1 ist eine Klimaanlage für ein Elektrofahrzeug mit einem Kältemittelkreislauf 10 und einem davon strömungstechnisch getrennten Kühlmittelkreislauf 12 gezeigt, wobei der Übersichtlichkeit halber nur diejenigen Komponenten der Kreisläufe 10, 12 zu sehen sind, die für die hier bedeutsamen Funktionen wesentlich sind.

Zum Kältemittelkreislauf 10 gehören ein Kompressor (Verdichter) 14, ein Kondensator (Verflüssiger) 16, ein Expansionsventil 18 und ein Verdampfer 20 sowie eine Seite eines zusätzlichen Transfer-Wärmetauschers 22. Der Bereich zwischen dem Kompressor 14 und dem Expansionsventil 18 bildet den Hochdruckbereich der Klimaanlage, während der Bereich zwischen dem Expansionsventil 18 und dem Kompressor 14 den Niederdruckbereich bildet.

Im Kältemittelkreislauf 10 zirkuliert ein vom Kompressor 14 angetriebenes Kältemittel, bevorzugt CO₂. In diesem Fall kommt als Kondensator 16 ein luftgekühlter Gaskühler (air gas cooler) zum Einsatz, wobei im Folgenden nicht zwischen einem Kondensator für herkömmliche Kältemittel und einem Gaskühler für CO₂ unterschieden wird.

Der Kühlmittelkreislauf 12 enthält eine regelbare Pumpe 24 und einen Wiedererwärmungs-Wärmetauscher 26, hier in Form eines konventionellen Lufterhitzers (reheat coil). Außerdem ist die andere Seite des Transfer-Wärmetauschers 22 Bestandteil des Kühlmittelkreislaufs 12. Das bedeutet, dass der Kühlmittelkreislauf 12 über den Transfer-Wärmetauscher 22 an den Kältemittelkreislauf 10 gekoppelt ist. Der Transfer-Wärmetauscher 22 kann beispielsweise ein kompakter Plattenwärmetauscher sein.

Optional ist im Kühlmittelkreislauf 12 eine Abzweigung 28 zu einer externen Wärmesenke 30 vorgesehen, die später noch genauer erläutert wird.

Im Kühlmittelkreislauf 12 kommt als Kühlmittel bevorzugt ein Wasser-Glykol-Gemisch oder nur Wasser zum Einsatz, wobei auch ein anderes geeignetes Kühlmittel als Wärmeträger verwendet werden kann.

Bei normalem Kühlbetrieb der Klimaanlage wird im Kältemittelkreislauf 10 das Kältemittel im gasförmigen Zustand vom Kompressor 14 verdichtet und dadurch stark erhitzt. Das aufgeheizte und unter hohem Druck stehende Gas wird durch den zusätzlichen Transfer-Wärmetauscher 22 heruntergekühlt, d.h. der Transfer-Wärmetauscher 22 arbeitet im Kältemittelkreislauf 10 als Gaskühler. Genauer gesagt gibt das erhitzte gasförmige Kältemittel Wärme an das Kühlmittel des Kühlmittelkreislaufs 12 ab.

Im Kältemittelkreislauf 10 wird das abgekühlte Gas durch den Kondensator 16 gedrückt, wo es durch ggf. angesaugte Umgebungsluft weiter gekühlt und verflüssigt wird. Vom Kondensator 16 gelangt das flüssige Kältemittel, das immer noch unter hohem Druck steht, in das Expansionsventil 18. Das Expansionsventil 18 sorgt dafür, dass sich das Kältemittel durch Volumenvergrößerung entspannen kann, wodurch es sich stark abkühlt. Das flüssige Kältemittel expandiert in den Verdampfer 20 hinein, wo es bei niedrigem Druck verdampft. Dabei wird der durch den Verdampfer 20 strömenden Luft so viel Wärme entzogen, dass zumindest ein Teil dieser Luft unter den Kondensationspunkt abgekühlt wird. Die stark abgekühlte und durch die Kondensation entfeuchtete Luft wird danach wieder etwas erwärmt, wie später noch genauer beschrieben wird, bevor sie über ein Gebläse in den Fahrzeuginnenraum geleitet wird. Das nun gasförmige, aber immer noch unter niedrigem Druck stehende Kältemittel wird wieder dem Kompressor 14 zugeführt, sodass der Kältemittelkreislauf 10 wiederholt durchlaufen werden kann.

Im Kühlmittelkreislauf 12 wird die dem Kältemittel nach dem Kompressor 14 vom Transfer-Wärmetauscher 22 entnommene Wärme auf das Kühlmittel übertragen, das den Transfer-Wärmetauscher 22 bezogen auf das Kältemittel in gegenläufiger Richtung durchströmt. Das erwärmte Kühlmittel wird mittels der regelbaren Pumpe 24 zum Wiedererwärmungs-Wärmetauscher 26 befördert, welcher bezogen auf den Luftstrom hinter dem Verdampfer 20 des Kältemittelkreislaufs 10 angeordnet ist. Somit kann dort Wärme vom Kühlmittel an die vom Verdampfer 20 stark abgekühlte und entfeuchtete Luft abgegeben werden, bevor diese in den Fahrzeuginnenraum geblasen wird.

Das Maß dieser Wiedererwärmung der Luft wird durch die Förderleistung der Pumpe 24 bestimmt, d.h. je höher die Pumpendrehzahl, desto mehr Wärme wird im Wiedererwärmungs-Wärmetauscher 26 an die Luft abgegeben. Durch die Einstellung der Förderleistung der Pumpe 24 lässt sich die Wiedererwärmung der Luft sehr präzise steuern.

Wenn der Kältemittelkreislauf 10 nicht zur Kühlung, sondern zum Heizen des Fahrzeuginnenraums in einem Wärmepumpen-Modus betrieben wird, kann die vom Kältemittelkreislauf 10 an den Kühlmittelkreislauf 12 übertragene Wärme über die optionale Abzweigung 28 gezielt an eine Stelle oder einen Bereich gebracht werden, wo eine Erwärmung erwünscht ist. Auf diese Weise kann z.B. in einem Elektrobus eine zusätzliche Fußbodenheizung oder eine Fußboden-nahe Heizung realisiert werden, um im Hinblick auf eine Komfortsteigerung eine übermäßige dachseitige Wärmeabgabe zu vermindern, da eine zu starke Wärmeabgabe von oben von den Insassen als unangenehm empfunden werden kann. Der Kühlmittelkreislauf 12 kann die Wärme mittels geeigneter Ventile oder dergleichen teilweise oder ausschließlich zu einer solchen externen Wärmesenke 30 befördern. Auch in diesem Anwendungsfall bestimmt die Einstellung der Förderleistung der Pumpe maßgeblich die Heizleistung.

Soweit der Kühlmittelkreislauf 12 ausschließlich oder hauptsächlich zur Wiedererwärmung der entfeuchteten Luft vorgesehen ist, kann die hierfür benötigte Wärme dem Kältemittelkreislauf 10 auch an einer anderen Stelle entnommen werden. So kann der Transfer-Wärmetauscher 22 auch zwischen dem Kondensator 16 und dem Expansionsventil 18 angeordnet sein. In diesem Fall arbeitet der Transfer-Wärmetauscher 22 bezogen auf den Kältemittelkreislauf 10 nicht als Gaskühler, sondern als Unterkühler (sub-cooler).

### Bezuqszeichenliste

- 10: Kältemittelkreislauf
- 12: Kühlmittelkreislauf
- 14: Kompressor
- 16: Kondensator
- 18: Expansionsventil
- 20: Verdampfer
- 22: Transfer-Wärmetauscher
- 24: Pumpe
- 26: Wiedererwärmungs-Wärmetauscher
- 28: Abzweigung
- 30: externe Wärmesenke

## Patentansprüche

1. Klimaanlage (10) für ein Fahrzeug, insbesondere für ein Elektrofahrzeug, mit
einem Kältemittelkreislauf (10) mit einem zirkulierenden Kältemittel zum Kühlen und Entfeuchten von Luft,
**gekennzeichnet, durch** einen separaten Kühlmittelkreislauf (12) mit einem zirkulierenden Kühlmittel,
wobei der Kühlmittelkreislauf (12) mittels eines Transfer-Wärmetauschers (22) an den Kältemittelkreislauf (10) gekoppelt ist und vom Kältemittelkreislauf (10) entnommene Wärme über einen Wiedererwärmungs-Wärmetauscher (26) an die durch den Kältemittelkreislauf (10) gekühlte und entfeuchtete Luft abgibt.

2. Klimaanlage (10) nach Anspruch 1, **dadurch gekennzeichnet, dass** der Transfer-Wärmetauscher (22) in einem Hochdruckbereich des Kältemittelkreislaufs (10) angeordnet ist.

3. Klimaanlage (10) nach Anspruch 1 oder 2, **dadurch gekennzeichnet, dass** der Transfer-Wärmetauscher (22) bezogen auf die Strömungsrichtung des Kältemittels zwischen einem Kompressor (14) und einem Kondensator (16) des Kältemittelkreislaufs (10) angeordnet ist.

4. Klimaanlage (10) nach Anspruch 1 oder 2, **dadurch gekennzeichnet, dass** der Transfer-Wärmetauscher (22) bezogen auf die Strömungsrichtung des Kältemittels zwischen einem Kondensator (16) und einem Expansionsventil (18) des Kältemittelkreislaufs (10) angeordnet ist.

5. Klimaanlage (10) nach einem der vorhergehenden Ansprüche, **dadurch gekennzeichnet, dass** der Transfer-Wärmetauscher (22) ein Plattenwärmetauscher ist.

6. Klimaanlage (10) nach einem der vorhergehenden Ansprüche, **dadurch gekennzeichnet, dass** der Kühlmittelkreislauf (12) eine Pumpe (24) mit einstellbarer Förderleistung enthält.

7. Klimaanlage (10) nach einem der vorhergehenden Ansprüche, **dadurch gekennzeichnet, dass** im Kühlmittelkreislauf (12) eine Abzweigung (28) zu einer externen Wärmesenke (30) vorgesehen ist.

8. Klimaanlage (10) nach einem der vorhergehenden Ansprüche, **dadurch gekennzeichnet, dass** das Kältemittel im Kältemittelkreislauf (10) CO₂ ist.

9. Klimaanlage (10) nach einem der vorhergehenden Ansprüche, **dadurch gekennzeichnet, dass** das Kühlmittel im Kühlmittelkreislauf (12) ein Glykol-Wasser-Gemisch oder Wasser ist.
